(19) Europäisches Patentamt
European Patent Office
Office européen des brevets

(11) Veröffentlichungsnummer: **0 366 969 B1**

(12) **EUROPÄISCHE PATENTSCHRIFT**

(45) Veröffentlichungstag der Patentschrift: **23.12.92**

(51) Int. Cl.$^5$: **C09J 157/04**, C08F 2/24, C08F 246/00

(21) Anmeldenummer: **89118473.1**

(22) Anmeldetag: **05.10.89**

# (54) Als Dichtungsmassen oder Klebstoffe für keramische Fliesen geeignete wässrige Zubereitungen.

(30) Priorität: **14.10.88 DE 3835041**

(43) Veröffentlichungstag der Anmeldung:
**09.05.90 Patentblatt 90/19**

(45) Bekanntmachung des Hinweises auf die Patenterteilung:
**23.12.92 Patentblatt 92/52**

(84) Benannte Vertragsstaaten:
**AT BE CH DE ES FR GB IT LI NL SE**

(56) Entgegenhaltungen:
**EP-A- 0 224 795**

**PATENT ABSTRACTS OF JAPAN, Band 10, Nr. 94 (C-338)[2151], 11. April 1986; JP-A-60 226 433 (NIPPON SHOKUBAI K.K.) 11-11-1985**

(73) Patentinhaber: **BASF Aktiengesellschaft**
**Carl-Bosch-Strasse 38**
**W-6700 Ludwigshafen(DE)**

(72) Erfinder: **Aydin, Oral, Dr.**
**Sophienstrasse 14**
**W-6800 Mannheim 1(DE)**
Erfinder: **Hummerich, Rainer, Dr.**
**Grosser Riedweg 17**
**W-6520 Worms 27(DE)**
Erfinder: **Krobb, Joachim**
**Helmbachstrasse 23**
**W-6740 Landau(DE)**
Erfinder: **Portugall, Michael, Dr.**
**Cuiserystrasse 4**
**W-6706 Wachenheim(DE)**
Erfinder: **Ramsteiner, Falko, Dr.**
**Westring 56**
**W-6700 Ludwigshafen(DE)**
Erfinder: **Zosel, Albrecht, Dr.**
**Ringweg 9**
**W-6940 Weinheim(DE)**

EP 0 366 969 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services

## Beschreibung

Die vorliegende Erfindung betrifft als Dichtungsmassen oder Klebstoffe für keramische Fliesen geeignete wäßrige Zubereitungen, im wesentlichen enthaltend

A) 3 bis 30 Gew.% Kunststoffteilchen, die aus

a) 0,1 bis 4 Gew.% wenigstens eines Mercaptosilans der allgemeinen

Formel I

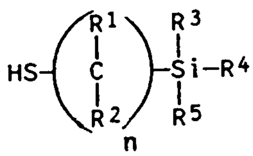

I ,

in der die Variablen folgende Bedeutung haben:

| | |
|---|---|
| n | 1 bis 8 |
| $R^1$, $R^2$ | Wasserstoff und/oder $C_1$- bis $C_4$-Alkylgruppen |
| $R^3$,$R^4$,$R^5$ | $C_1$- bis $C_6$-Alkylgruppen und/oder $C_1$- bis $C_6$-Alkoxygruppen, mit der Maßgabe, daß mindestens einer der Reste $R^3$ bis $R^5$ eine Alkoxygruppe ist, |

und

b) radikalisch polymerisierbaren ethylenisch ungesättigten Monomeren, ausgewählt aus Acrylsäure- und Methacrylsäureestern eines $C_1$- bis $C_8$-Alkanols, eines $C_9$- bis $C_{18}$-n-Alkanols sowie eines diprimären $C_2$- bis $C_8$-n-Alkandiols, 3 bis 5 C-Atome enthaltenden $\alpha,\beta$-ethylenisch ungesättigten Mono- oder Dicarbonsäuren sowie deren Mono- oder Diamide, die an den N-Atomen durch 1 bis 3 C-Atome enthaltende Alkyl- oder Alkylolgruppen substituiert sein können, Acryl- und Methacrylnitril, Vinylester von $C_2$- bis $C_{12}$-n-Alkansäuren und als vinylaromatische Monomere Styrol, Vinyltoluol, Chlorstyrol oder tert.-Butylstyrol als Restmenge aufgebaut sind,

wobei die Polymerisate eine Glastemperatur von -60 bis +40 °C aufweisen,

B) 40 bis 90 Gew.% anorganische Füllstoffe,

C) wirksame Mengen eines Emulgators,

D) 0 bis 15 Gew.% äußerer Weichmacher und

E) 5 bis 40 Gew.% Wasser.

Kunststoffteilchen, anorganische Füllstoffe und wirksame Mengen eines Emulgators enthaltende wäßrige Zubereitungen sind allgemein bekannt und finden u.a. als Dichtungsmassen oder Klebstoffe für keramische Fliesen Verwendung. Unbefriedigend ist jedoch, daß ihre Haftung im verfestigten Zustand eine geringe Wasserbeständigkeit aufweist.

Die DE-A 21 48 456 betrifft Baukleber für Verklebungen mit verbesserter Naßhaftung, auf der Basis von Kunststoffteilchen und anorganische Füllstoffe enthaltenden wäßrigen Dispersionen, wobei die Kunststoffteilchen 0,3 bis 5 Gew.% ungesättigte Alkoxysilane einpolymerisiert enthalten. Jedoch vermag auch die Wasserbeständigkeit der Verklebungen dieser Baukleber nicht voll zu befriedigen.

Aus der EP-A2-224795 sind als Haftkleber mit verbesserter Haftklebefähigkeit wäßrige Kunststoffdispersionen bekannt, deren Polymerisate 0,01 bis 0,5 Gew.% mit einer Mercaptogruppe substituierte gesättigte Alkoxysilane einpolymerisiert enthalten.

Der vorliegenden Erfindung liegt die Aufgabe zugrunde, als Dichtungsmassen oder Klebstoffe für keramische Fliesen geeignete wäßrige Zubereitungen bereitzustellen, deren Haftung im verfestigten Zustand eine noch bessere Wasserbeständigkeit aufweist als die wäßriger Zubereitungen auf der Basis von anorganischen Füllstoffen und 0,3 bis 5 Gew.% ungesättigte Alkoxysilane einpolymerisiert enthaltenden Kunststoffteilchen.

Diese Aufgabe wird durch die eingangs definierten Zubereitungen gelöst.

Weiterhin wurde gefunden, daß solche wäßrige Zubereitungen besonders gut als Klebstoff mit verbesserter Naßhaftung für keramische Fliesen geeignet sind, die

3 bis 25 Gew.% Komponente A

50 bis 85 Gew.% Komponente B

0 bis 15 Gew.% Komponente D

10 bis 30 Gew.% Komponente E und

wirksame Mengen eines Emulgators C enthalten, während als Dichtungsmassen mit verbesserter Naßhaftung bevorzugt wäßrige Zubereitungen verwendet werden, die

15 bis 30 Gew.% Komponente A
40 bis 60 Gew.% Komponente B
0 bis 15 Gew.% Komponente D
15 bis 25 Gew.% Komponente E und
wirksame Mengen eines Emulgators C enthalten.

Die Komponente A enthält in vorteilhafter Weise Mercaptosilane I mit n = 2 bis 4 einpolymerisiert. Bevorzugte Reste $R^1$, $R^2$ sind Wasserstoff und Methyl, während als Reste $R^3$ bis $R^5$ mit Vorteil Methyl, Ethyl, Methoxy und Ethoxy in Betracht kommen, wobei mindestens einer der Reste $R^3$ bis $R^5$ Methoxy oder Ethoxy sein muß. Besonders bevorzugt einpolymerisierte Mercaptosilane I sind 3-Mercaptopropyl-trimethoxysilan, 3-Mercaptopropyl-triethoxysilan sowie 3-Mercaptopropyl-methyl-dimethoxysilan. Die Mercaptosilane I sind bekannt und im Handel erhältlich.

Als radikalisch polymerisierbare ethylenisch ungesättigte Monomere für den Aufbau der Komponente A kommen Acrylsäure- und Methacrylsäureester eines $C_1$- bis $C_8$-Alkanols, eines $C_9$- bis $C_{18}$-n-Alkanols sowie eines diprimären $C_2$- bis $C_8$-n-Alkandiols, 3 bis 5 C-Atome enthaltende $\alpha,\beta$-ethylenisch ungesättigte Mono- oder Dicarbonsäuren sowie deren Mono- oder Diamide, die an den N-Atomen durch 1 bis 3 C-Atome enthaltende Alkyl- oder Alkylolgruppen substituiert sein können, Acryl- und Methacrylnitril, Vinylester von $C_2$- bis $C_{12}$-n-Alkansäuren und als vinylaromatische Monomere Styrol, Vinyltoluol, Chlorstyrol oder tert.-Butylstyrol in Betracht.

Aus der Reihe der Acrylate sind Methyl-, Ethyl-, Isopropyl-, n-Butyl-, Isobutyl-, n-Hexyl-, 2-Ethylhexyl-, Decyl- und Dodecylacrylat zu nennen, wobei n-Butyl-, Isobutyl-, n-Hexyl- und 2-Ethylhexylacrylat von besonderem Interesse sind. Als Methacrylsäureester seien vor allem Methyl-, Isobutyl-, n-Butyl-, tert.-Butyl-, 2-Ethylhexyl-, Dodecyl- und Octadecylmethacrylat genannt.

Bevorzugte Hydroxyalkylacrylate sowie -methacrylate sind 2-Hydroxyethylacrylat und -methacrylat, 3-Hydroxypropylacrylat und -methacrylat, 4-Hydroxybutylacrylat und -methacrylat, 6-Hyxdroxyhexylacrylat und -methacrylat sowie 8-Hydroxyoctylacrylat und -methacrylat.

Als $\alpha,\beta$-ethylenisch ungesättigte Carbonsäuren kommen vor allem Acryl- und Methacrylsäure sowie ferner Crotonsäure, Maleinsäure und Fumarsäure sowie Itaconsäure in Betracht.

Von diesen Säuren leiten sich auch die bevorzugt eingesetzten ungesättigten Säureamide und deren Derivate ab, nämlich Acryl- und Methacrylamid, N-Methylol-acryl- und -methacrylamid, N-Methyl-, N-Ethyl-, N-n-Butyl-acryl- und -methacrylamid, sowie ferner Crotonsäureamid, N-Methylol-crotonsäureamid, Maleinsäuremono- und -diamid, Fumarsäurediamid und Itaconsäurediamid.

Besonders geeignete Vinylester sind Vinylacetat, Vinylpropionat, Vinylbutyrat, Vinyldecanoat und Vinyldodecanoat.

Die ethylenisch ungesättigten Monomeren können sowohl in homo- als auch in copolymerer Weise in die Komponente A eingebaut werden, wobei das zahlenmittlere Molekulargewicht von A im allgemeinen $5 \cdot 10^3$ bis $5 \cdot 10^6$, bevorzugt $10^5$ bis $2 \cdot 10^6$, beträgt.

Mit Hilfe der Beziehung von Fox werden die Gewichtsanteile der ethylenisch ungesättigten Monomeren an A in vorteilhafter Weise so gewählt, daß A eine Glastemperatur $T_g$ von -60 bis +40 °C aufweist.

Für eine Verwendung der erfindungsgemäßen wäßrigen Zubereitungen als Dichtungsmassen werden bevorzugt Polymere A mit einer $T_g$ von -60 bis +10 °C, insbesondere mit einer $T_g$ von -55 bis -5 °C, und für eine Verwendung als Klebstoffe für keramische Fliesen Polymere A mit einer $T_g$ von -10 bis +40 °C, insbesondere mit einer $T_g$ von 0 bis +30 °C, eingesetzt.

Nach Fox (T.G.Fox, Bull. Am. Phys. Soc. (Ser. II) 1, 123 [1956]) gilt für die Glastemperatur von Copolymeren in guter Näherung:

$$\frac{1}{T_g} = \frac{X^1}{T_g^1} + \frac{X^2}{T_g^2} + \ldots\ldots\ldots \frac{X^n}{T_g^n}$$

wobei $X^1$, $X^2$, ..., $X^n$ die Massenbrüche der Monomeren 1, 2, ..., n und $T_g^1$, $T_g^2$, ..., $T_g^n$ die Glastemperaturen der entsprechenden Homopolymeren in Grad Kelvin bedeuten. Die Glastemperaturen der Homopolymerisate der oben aufgeführten Monomeren sind bekannt und z.B. in J. Brandrup, E.H. Immergut, Polymer Handbook 1st Ed. J. Wiley, New York 1966 und 2nd Ed. J. Wiley, New York 1975 aufgeführt.

Der Einfluß der Mercaptosilane I auf die Glastemperatur von A ist im allgemeinen aufgrund ihres geringen Gewichtsanteils vernachlässigbar.

Die Polymerisate A werden zweckmäßig als Kunststoffdispersionen nach dem an sich bekannten Verfahren der Emulsionspolymerisation hergestellt.

Als Emulgatoren C haben sich hierfür besonders ethoxylierte Alkylphenole (EO-Grad: 3 bis 30, Alkylrest $C_8$ bis $C_{10}$) und/oder ethoxylierte Fettalkohole (EO-Grad: 5 bis 50, Alkylrest: $C_8$ bis $C_{25}$), die Natriumsalze von Alkylsulfaten wie Natrium-n-dodecylsulfat oder Natrium-n-dodecylbenzolsulfonat sowie ethoxylierte Alkylphenole die zusätzlich sulfatiert sind (EO-Grad: 5 bis 50, Alkylrest $C_8$ bis $C_{10}$) bewährt. Als wasserlösliche Polymerisationsinitiatoren kommen vor allem Peroxidisulfate wie Kaliumperoxidisulfat oder kombinierte Systeme, die ein organisches Reduktionsmittel und ein Peroxid enthalten, z.B. Formaldehydnatriumsulfoxylat/Wasserstoffperoxid, in Betracht. Die Emulsionspolymerisationstemperatur beträgt im allgemeinen 30 bis 150, bevorzugt 50 bis 90°C Nach beendeter Polymerisation wird die fertige Dispersion in vorteilhafter Weise mit Ammoniak auf pH 3 bis 9 eingestellt.

Als Komponente B werden mit Vorteil Aluiminiumsilicate, Quarz, gefällte oder pyrogene Kieselsäure, Leicht- und Schwerspat, Talcum, Dolomit und besonders bevorzugt Calciumcarbonat zugesetzt. Weiterhin kommen als Komponente B, insbesondere für als Dichtungsmassen zu verwendende wäßrige Zubereitungen, farbgebende Pigmente in Betracht. Als Weißpigmente werden bevorzugt Titanweiß, Bleiweiß, Zinkweiß, Lithophone und Antimonweiß, als Schwarzpigmente Eisenoxidschwarz, Manganschwarz, Cobaltschwarz, Antimonschwarz und Ruß, als Buntpigmente z.B. Chromgelb, Mennige, Zinkgelb, Zinkgrün, Pinkrot, Cadmiumrot, Cobaltblau, Berliner Blau, Ultramarin, Manganviolett, Cadmiumgelb, Molybdatorange oder Strontiumgelb eingesetzt. Im allgemeinen werden die Füllstoffe in feiner Körnung zugegeben. Die durchschnittliche Korngröße, als arithmetisches Mittel der jeweils größten Durchmesser, beträgt bevorzugt 0,5 bis 200 $\mu$m.

Zusätzlich können die erfindungsgemäßen Zubereitungen bis zu 15 Gew.% als äußere Weichmacher D geeignete niedermolekulare organische Substanzen enthalten. Bevorzugt werden Adipinsäureester wie Di-2-ethylhexyladipat, Di-iso-octyladipat oder Di-iso-decyladipat, Phthalsäureester wie Di-n-butylphthalat, Di-isoheptylphthalat, Di-isooctylphthalat oder Di-methylglycolphthalat, Essigsäureester eins Diethylenglycolmonoalkylethers, dessen Alkylgruppe 2 bis 5 C-Atome enthalt, Polyisobutene eines zahlenmittleren Molekulargewichtes von 700 bis 1500 sowie oxalkylierte Alkylphenole (Alkylrest: $C_8$ bis $C_{14}$), die durch Addition von 5 bis 10 mol Ethylenoxid und/oder Propylenoxid an 1 mol Alkylphenol erhalten werden, eingesetzt.

Desweiteren enthalten die erfindungsgemäßen Zubereitungen als Komponente E 5 bis 40, bevorzugt 10 bis 30 Gew.% Wasser, wobei für als Dichtungsmassen zu verwendende Zubereitungen ein Wassergehalt von 15 bis 25 Gew.% besonders bevorzugt ist.

In vorteilhafter Weise bildet diese Wassermenge das Dispersionsmedium für die die Polymerisate A enthaltenden Kunststoffdispersionen. Wasser kann jedoch auch in reiner Form den erfindungsgemäßen Zubereitungen zugegeben werden.

Als zusätzliche Hilfsmittel können die erfindungsgemäßen Zubereitungen in untergeordneten Mengen Mittel zur Verbesserung ihrer Haftung wie Dihydrazinverbindungen und Zinktetraminkomplexe, z.B. Zinktetramincarbonat oder Zinktetraminacetat, Verdickungsmittel wie Methylhydroxypropylcellulose, schaumdämpfende Mittel und Konvervierungsstoffe wie Fungizide enthalten. Insbesondere bei als Dichtungsmassen zu verwendenden Zubereitungen ist es empfehlenswert, den erfindungsgemäßen Zubereitungen 0,1 bis 1 Gew.% Verdickungsmittel zuzugeben.

Die Herstellung der erfindungsgemäßen Zubereitungen erfolgt zweckmäßigerweise durch Einrühren des Füllstoffes und der gegebenenfalls als Weichmacher oder weitere Hilfsmittel eingesetzten Substanzen in eine 40 bis 70 gew.-%ige wäßrige Kunststoffdispersion, die die Komponente A als disperse Phase enthält. Um eine homogene Verteilung der Füllstofffe zu gewährleisten, können dabei 0,2 bis 0,6 Gew.%, bezogen auf die Füllstoffe, an Netz- und Dispergiermitteln zugegeben werden. Mit Vorteil werden als Netz- und Dispergiermittel Ammonium- oder Alkalimetallsalze niedermolekularer Polyacrylsäuren sowie Polyphosphate wie Natriumhexametaphosphat eingesetzt.

Neben einer erhöhten Wasserfestigkeit weisen die erfindungsgemäßen Zubereitungen im verfestigten Zustand als weitere bemerkenswerte Eigenschaft eine erhöhte Elastiztät auf. Dies trifft in besonderem Maß auf Zubereitungen zu, die als Komponente A ein Polymerisat mit einer Glastemperatur von -60 bis +10°C aufweisen und ist bei deren Verwendung als Dichtungsmassen von Vorteil. Ein Maß für die Elastizität fester Stoffe ist ihr Rückstellvermögen. Es sagt aus, inwieweit bei Fortfall einer Deformationskraft der feste Körper in die ursprüngliche Lage überführt wird und ist für Dichtungsmassen nach DIN 52458 wie folgt definiert:

$$\text{Rückstellvermögen} = \frac{\text{gedehnte Weite - Weite nach Rückstellung}}{\text{gedehnte Weite - Originalweite}} \cdot 100$$

Beispiele

Beispiele D 1 bis D 5 und Vergleichsbeispiel DV 1

Herstellung verschiedener Dispersionspolymerisate

Beispiel D 1 (allgemeine Arbeitsvorschrift)

Eine Mischung aus

| | |
|---|---|
| 180 g | Wasser |
| 0,06 g | Na-Salz von ethoxyliertem (EO-Grad 25) und sulfatiertem p-Isooctylphenol (Emulgator I) |
| 0,06 g | ethoxyliertes (EO-Grad 25) p-Isooctylphenol (Emulgator II) |
| 0,8 g | Kaliumperoxidisulfat und |
| 6,5 g | Monomermischung D1 |

wurde auf 85 °C erhitzt und nach 15 min im Laufe von 2 Stunden bei dieser Temperatur unter Rühren mit einer Emulsion aus

| | |
|---|---|
| 100 g | Wasser |
| 6 g | Emulgator I |
| 6 g | Emulgator II und |
| 650 g | Monomermischung D 1 |

und dazu synchron in einem separaten Zulauf mit einer Lösung von

| | |
|---|---|
| 2,5 g | Kaliumperoxidisulfat in |
| 80 g | Wasser |

versetzt. Danach wurde die Polymerisation noch eine Stunde fortgesetzt. Die fertige Dispersion wurde mit einer 25 gew.%igen wäßrigen Ammoniaklösung auf pH 5 eingestellt.

Die Zusammensetzung der Polymerisate, ihre Glastemperatur (berechnet nach Fox) und der Feststoffgehalt der jeweiligen Dispersionen D 1 bis D 5 sowie DV1 gehen aus Tabelle 1 hervor.

Tabelle 1

| % Monomere | D 1 | DV 1 | D 2 | D 3 | D 4 | D 5 |
|---|---|---|---|---|---|---|
| n-Butylacrylat | 48,8 | 48,7 | - | 86 | 86 | 86 |
| Ethylhexylacrylat | - | - | 88 | - | - | - |
| Hydroxyethylacrylat | - | - | - | 2 | 2 | 2 |
| Acrylsäure | 3 | 3 | 3 | 1,5 | 1,7 | 2 |
| Acrylnitril | - | - | 8,9 | 5 | 5 | 4 |
| Styrol | 47,8 | 47,8 | - | - | - | - |
| Vinylacetat | - | - | - | 5 | 5 | 5 |
| Methacryloxypropyl trimethoxysilan | - | 0,5 | - | - | - | - |
| Mercaptopropyltrimethoxysilan | 0,4 | - | 0,1 | 0,5 | 0,3 | 1,0 |
| Glastemperatur (°C) | +20 | +20 | -55 | -40 | -40 | -40 |
| Feststoffgehalt (Gew.%) | 60,1 | 60,1 | 60,1 | 65,1 | 65,0 | 64,8 |

Beispiele F 1 und FV 1

Wäßrige Zubereitungen als Klebstoffe für keramische Fliesen und die Wasserbeständigkeit ihrer Verklebungen im verfestigten Zustand

In 100 g der jeweils auf 50 Gew.% verdünnten Dispersionen D 1 und DV 1 wurden zur Herstellung der Fliesenkleber F 1 und FV 1 jeweils

| | |
|---|---|
| 5 g | Ester aus Essigsäure und Diethylenglycolmonobutylether |
| 45 g | einer 5 gew.-%igen wäßrigen Lösung von Methylhydroxypropylcellulose |
| 172,5 g | gemahlener Quarz mit einer durchschnittlichen Korngröße von 164 µm |
| 172,5 g | gemahlener Quarz mit einer durchschnittlichen Korngröße von 32 µm |

eingerührt.

Zur Bestimmung der Wasserbeständigkeit ihrer Verklebungen wurde eine Probeplatte aus Asbestzement (60 x 50 mm) jeweils in ein auf einem Prüfkörper aus Asbestzement befindliches naßes Kleberbett mit Hilfe von Abstandhaltern (1,5 mm) aus Polyvinylchlorid so eingelegt, daß eine homogene Verklebungsfläche (50 x 50 mm) entstand.

Nach 14-tägigem Trocknen bei 23 °C und 50 % relativer Luftfeuchtigkeit wurde die Verklebung in getrennten Versuchen 7 bzw. 14 Tage bei 23 °C unter Wasser gelagert.

Anschließend wurde im nassen Zustand mit einer Zugprüfmaschine bei einer Abzugsgeschwindigkeit von 5 mm/min die Höchstkraft-Belastung (Höchstkraft in N/geklebte Prüffläche in $mm^2$) bestimmt.

Die Ergebnisse enthält Tabelle 2

Tabelle 2

| | Höchstkraft-Belastung $N/mm^2$ | |
|---|---|---|
| | 7d | 14d |
| Fliesenkleber F 1 | 0,16 | 0,28 |
| Fliesenkleber FV 1 | 0,08 | 0,09 |

Beispiele M 2 bis M 5

Wäßrige Zubereitungen als Dichtungsmassen und deren Rückstellvermögen

43 g der jeweils auf 60 Gew.% verdünnten Dispersionen D 2 bis D 5 wurden mit einer 25 gew.-%igen wäßrigen Ammoniaklösung auf pH 8 eingestellt. Anschließend wurden in diese verdünnten Dispersionen jeweils 8 g Di-methylglycolphtalat und 1 g Eisenoxidschwarz (durchschnittliche Korngröße 1 µm) sowie 70 g feinteiliges $CaCO_3$ (durchschnittliche Korngröße 5 µm) eingerührt. Nach der Füllstoffzugabe wurden die Zubereitungen noch 5 min unter vermindertem Druck (800 mbar) nachgerührt, um eingeschlossene Luftblasen zu entfernen.

Das Rückstellvermögen der erhaltenen Dichtungsmassen wurde gemäß DIN 52458 nach 4 wöchiger Lagerung der Probekörper bei 23°C und 50 % relativer Luftfeuchtigkeit bei einem Dehnwert von 100 % bestimmt. Die Ergebnisse enthält Tabelle 3.

Tabelle 3

| | | Rückstellvermögen % |
|---|---|---|
| Dichtungsmasse | M 2 | 60 |
| " | M 3 | 65 |
| " | M 4 | 70 |
| " | M 5 | 60 |

## Patentansprüche

1. Als Dichtungsmassen oder Klebstoffe für keramische Fliesen geeignete wäßrige Zubereitungen, im wesentlichen enthaltend
   A) 3 bis 30 Gew.% Kunststoffteilchen, die aus
      a) 0,1 bis 4 Gew.% wenigstens eines Mercaptosilans der allgemeinen Formel I

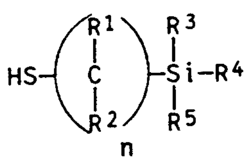

I ,

in der die Variablen folgende Bedeutung haben:

| | |
|---|---|
| n | 1 bis 8 |
| $R^1$, $R^2$ | Wasserstoff und/oder $C_1$- bis $C_4$-Alkylgruppen |
| $R^3$,$R^4$,$R^5$ | $C_1$- bis $C_6$-Alkylgruppen und/oder $C_1$- bis $C_6$-Alkoxygruppen, mit der Maßgabe, daß mindestens einer der Reste $R^3$ bis $R^5$ eine Alkoxygruppe ist, |

und

b) radikalisch polymerisierbaren ethylenisch ungesättigten Monomeren, ausgewählt aus Acrylsäure- und Methacrylsäureestern eines $C_1$- bis $C_8$-Alkanols, eines $C_9$- bis $C_{18}$-n-Alkanols sowie eines diprimären $C_2$- bis $C_8$-n-Alkandiols, 3 bis 5 C-Atome enthaltenden α,β-ethylenisch ungesättigten Mono- oder Dicarbonsäuren sowie deren Mono- oder Diamide, die an den N-Atomen durch 1 bis 3 C-Atome enthaltende Alkyl- oder Alkylolgruppen substituiert sein können, Acryl- und Methacrylnitril, Vinylester von $C_2$- bis $C_{12}$-Alkansäuren und als vinylaromatische Monomere Styrol, Vinyltoluol, Chlorstyrol oder tert.-Butylstyrol, als Restmenge aufgebaut sind,

wobei die Polymerisate eine Glastemperatur von -60 bis +40°C aufweisen,

B) 40 bis 90 Gew.% anorganische Füllstoffe,

C) wirksame Mengen eines Emulgators,

D) 0 bis 15 Gew.% äußeren Weichmacher und

E) 5 bis 40 Gew.% Wasser.

2. Wäßrige Zubereitungen nach Anspruch 1, enthaltend als wesentliche Bestandteile

3 bis 25 Gew.% Komponente A
50 bis 85 Gew.% Komponente B
0 bis 15 Gew.% Komponente D
10 bis 30 Gew.% Komponente E und
wirksame Mengen eines Emulgators C.

**3.** Wäßrige Zubereitungen nach Anspruch 1, enthaltend als wesentliche Bestandteile

15 bis 30 Gew.% Komponente A
40 bis 60 Gew.% Komponente B
0 bis 15 Gew.% Komponente D
15 bis 25 Gew.% Komponente E und
wirksame Mengen eines Emulgators C.

**4.** Wäßrige Zubereitungen nach Anspruch 2, enthaltend als Komponente A ein Polymerisat mit einer Glastemperatur von 0 bis 30°C

**5.** Wäßrige Zubereitungen nach Anspruch 3, enthaltend als Komponente A ein Polymerisat mit einer Glastemperatur von -60 bis -5°C.

**6.** Wäßrige Zubereitungen nach den Ansprüchen 3 oder 5, enthaltend als zusätzliches Hilfsmittel 0,1 bis 1 Gew.% Verdickungsmittel.

**7.** Wäßrige Zubereitungen nach den Ansprüchen 1 bis 6, enthaltend als Komponente B Calciumcarbonat mit einer durchschnittlichen Korngröße von 0,5 bis 200 µm.

**8.** Verfahren zur Herstellung der wäßrigen Zubereitungen gemäß den Ansprüchen 1 bis 7, dadurch gekennzeichnet, daß in eine 40 bis 70 gew.-%ige wäßrige Kunststoffdispersion, die den Emulgator C und die Komponente A als disperse Phase enthält, die Komponenten B und D sowie in untergeordneten Mengen zusätzliche Hilfsstoffe eingerührt werden.

**9.** Verwendung der wäßrigen Zubereitungen gemäß den Ansprüchen 1 bis 7 als Dichtungsmassen oder Klebstoffe für keramische Fliesen.

**Patentansprüche für folgenden Vertragsstaat : ES**

**1.** Verfahren zur Herstellung von als Dichtungsmassen oder Klebstoffe für keramische Fliesen geeigneten wäßrigen Zubereitungen, dadurch gekennzeichnet, daß man nach dem an sich bekannten Verfahren der Emulsionspolymerisation, unter Verwendung wirksamer Mengen eines Emulgators C, eine 40 bis 70 gew.-%ige wäßrige Kunststoffdispersion eines Kunststoffes A, bestehend aus
a) 0,1 bis 4 Gew.% wenigstens eines Mercaptosilans der allgemeinen

Formel I

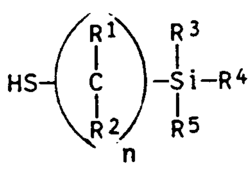

I ,

in der die Variablen folgende Bedeutung haben:

| | |
|---|---|
| n | 1 bis 8 |
| $R^1$, $R^2$ | Wasserstoff und/oder $C_1$- bis $C_4$-Alkylgruppen |
| $R^3$,$R^4$,$R^5$ | $C_1$- bis $C_6$-Alkylgruppen und/oder $C_1$- bis $C_6$-Alkoxygruppen, mit der Maßgabe, daß mindestens einer der Reste $R^3$ bis $R^5$ eine Alkoxygruppe ist, |

und
b) radikalisch polymerisierbaren ethylenisch ungesättigten Monomeren, ausgewählt aus Acrylsäure- und Methacrylsäureestern eines $C_1$- bis $C_8$-Alkanols, eiens $C_9$- bis $C_{18}$-n-Alkanols sowie eines

diprimären $C_2$-bis $C_8$-n-Alkandiols, 3 bis 5 C-Atome enthaltenden $\alpha,\beta$-ethylenisch ungesättigten Mono- oder Dicarbonsäuren sowie deren Mono- oder Diamide, die an den N-Atomen durch 1 bis 3 C-Atome enthaltende Alkyl- oder Alkylolgruppen substituiert sein können, Acryl- und Methacrylnitril, Vinylester von $C_2$- bis $C_{12}$-n-Alkansäuren und als vinylaromatische Monomere Styrol, Vinyltoluol, Chlorstyrol oder tert.-Butylstyrol als Restmenge,

mit der Maßgabe hergestellt, daß die Polymerisate A eine Glastemperatur von -60 bis +40°C aufweisen, und anschließend in diese wäßrige Kunststoffdispersion, bezogen auf die fertige Zubereitung,

40 bis 90 Gew.% anorganische Füllstoffe B,
0 bis 15 Gew.% äußere Weichmacher D

und in untergeordneten Mengen zusätzliche Hilfsstoffe mit der Maßgabe einrührt, daß der Wassergehalt der fertigen Zubereitung 5 bis 40 Gew.% beträgt.

**2.** Verfahren nach Anspruch 1, dadurch gekennzeichnet, daß, bezogen auf die fertige Zubereitung,

3 bis 25 Gew.% Komponente A
50 bis 85 Gew.% Komponente B
0 bis 15 Gew.% Komponente D
10 bis 30 Gew.% Komponente E und
wirksame Mengen eines Emulgators C

eingesetzt werden.

**3.** Verfahren nach Anspruch 1, dadurch gekennzeichnet, daß, bezogen auf die fertige Zubereitung,

15 bis 30 Gew.% Komponente A
40 bis 60 Gew.% Komponente B
0 bis 12 Gew.% Komponente D
15 bis 25 Gew.% Komponente E und
wirksame Mengen eines Emulgators C

eingesetzt werden.

**4.** Verfahren nach Anspruch 2, dadurch gekennzeichnet, daß die Glastemperatur der Komponente A 0 bis 30°C beträgt.

**5.** Verfahren nach Anspruch 3, dadurch gekennzeichnet, daß die Glastemperatur der Komponente A -60 bis -5°C beträgt.

**6.** Verfahren nach den Ansprüchen 3 oder 5, dadurch gekennzeichnet, daß, bezogen auf die fertige Zubereitung, als zusätzliche Hilfsmittel 0,1 bis 1 Gew.% Verdickungsmittel eingesetzt werden.

**7.** Verfahren nach den Ansprüchen 1 bis 6, dadurch gekennzeichnet, daß als Komponente B Calciumcarbonat mit einer durchschnittlichen Korngröße von 0,5 bis 200µm eingesetzt werden.

**8.** Verwendung der nach einem Verfahren gemäß der Ansprüche 1 bis 7 erhaltenen Verfahrensprodukte als Dichtungsmassen oder Klebstoffe für keramische Fliesen.

## Claims

**1.** An aqueous formulation suitable as a sealing compound or an adhesive for ceramic tiles and essentially containing
A) from 3 to 30% by weight of plastics particles which consist of
a) from 0.1 to 4% by weight of one or more mercaptosilanes of the general formula I

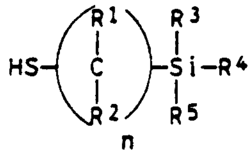

I

where n is from 1 to 8, $R^1$ and $R^2$ are hydrogen and/or $C_1$-$C_4$-alkyl, $R^3$, $R^4$ and $R^5$ are $C_1$-$C_6$-alkyl and/or $C_1$-$C_6$-alkoxy, with the proviso that one or more of the radicals $R^3$ to $R^5$ is alkoxy, and

b) ethylenically unsaturated monomers capable of undergoing free radical polymerization, selected from the group consisting of acrylates and methacrylates of $C_1$-$C_8$-alkanol, of $C_9$-$C_{18}$-n-alkanol and of diprimary $C_2$-$C_8$-n-alkanediol, $\alpha,\beta$-ethylenically unsaturated mono- or dicarboxylic acids of 3 to 5 carbon atoms and mono- or diamides thereof, which may be substituted at the N atoms by alkyl or alkylol groups of 1 to 3 carbon atoms, and acrylonitrile, methacrylonitrile and vinyl esters of $C_2$-$C_{12}$-n-alkanoic acids and, as vinylaromatic monomers, styrene, vinyltoluene, chlorostyrene or tert-butylstyrene, as the residual amount,

the polymer having a glass transition temperature of from -60 to +40 °C,

B) from 40 to 90% by weight of an inorganic filler,

C) an effective amount of an emulsifier,

D) from 0 to 15% by weight of an external plasticizer and

E) from 5 to 40% by weight of water.

**2.** An aqueous formulation as claimed in claim 1, containing, as essential components,
from 3 to 25% by weight of component A,
from 50 to 85% by weight of component B,
from 0 to 15% by weight of component D,
from 10 to 30% by weight of component E and
an effective amount of an emulsifier C.

**3.** An aqueous formulation as claimed in claim 1, containing, as essential components,
from 15 to 30% by weight of component A,
from 40 to 60% by weight of component B,
from 0 to 15% by weight of component D,
from 15 to 25% by weight of component E and
an effective amount of an emulsifier C.

**4.** An aqueous formulation as claimed in claim 2, containing, as component A, a polymer having a glass transition temperature of from 0 to 30 °C.

**5.** An aqueous formulation as claimed in claim 3, containing, as component A, a polymer having a glass transition temperature of from -60 to -5 °C.

**6.** An aqueous formulation as claimed in claim 3 or 5, containing from 0.1 to 1% by weight of a thickener as an additional assistant.

**7.** An aqueous formulation as claimed in any of claims 1 to 6, containing, as component B, calcium carbonate having a mean particle size of from 0.5 to 200 µm.

**8.** A process for the preparation of an aqueous formulation as claimed in any of claims 1 to 7, wherein components B and D and minor amounts of additional assistants are stirred into a 40-70% strength by weight aqueous plastics dispersion which contains the emulsifier C and component A as the disperse phase.

**9.** Use of an aqueous formulation as claimed in any of claims 1 to 7 as a sealing compound or an adhesive for ceramic tiles.

**Claims for the following Contracting State : ES**

**1.** Process for the preparation of an aqueous formulation suitable as a sealing compound or adhesive for ceramic tiles, wherein 40-70% strength by weight aqueous plastic dispersion of a plastic A consisting of

a) from 0.1 to 4% by weight of one or more mercaptosilanes of the general formula I

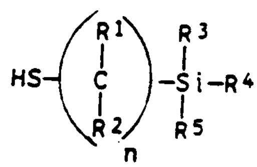

(I),

where n is from 1 to 8,
$R^1$ and $R^2$ are hydrogen and/or $C_1$-$C_4$-alkyl and $R^3$, $R^4$ and $R^5$ are $C_1$-$C_6$-alkyl and/or $C_1$-$C_6$-alkoxy, with the proviso that one or more of the radicals $R^3$ to $R^5$ is alkoxy,
and

b) ethylenically unsaturated monomers capable of undergoing free radical polymerization, selected from the group consisting of acrylates and methacrylates of a $C_1$-$C_8$-alkanol, of a $C_9$-$C_{18}$-n-alkanol and of a diprimary $C_2$-$C_8$-b-alkanediol, $\alpha,\beta$-ethylenically unsaturated mono- or dicarboxylic acids of 3 to 5 carbon atoms and mono- or diamides thereof, which may be substituted at the N atoms by alkyl or alkylol groups of 1 to 3 carbon atoms, and acrylonitrile, methacrylonitrile and vinyl esters of $C_2$-$C_{12}$-n-alkanoic acids and, as vinyl aromatic monomers, styrene, vinyltoluene, chlorostyrene or tert-butylstyrene, as residual amount,

is prepared by the conventional method of emulsion polymerization, using effective amounts of an emulsifier C, with the proviso that the polymers A have a glass transition temperature of from -60 to +40 °C, and then

from 40 to 90% by weight of inorganic fillers B,

from 0 to 15% by weight of external plasticizers D and minor amounts of additional assistants, based on the prepared formulation, are stirred into this aqueous plastics dispersion, with the proviso that the water content of the prepared formulation is from 5 to 40% by weight.

**2.** A process as claimed in claim 1, wherein
from 3 to 25% by weight of component A,
from 50 to 85% by weight of component B,
from 0 to 15% by weight of component D,
from 10 to 30% by weight of component E and
an effective amount of an emulsifier C
are employed, based on the ready-to-use formulation.

**3.** A process as claimed in claim 1, wherein
from 15 to 30% by weight of component A,
from 40 to 60% by weight of component B,
from 0 to 12% by weight of component D,
from 15 to 25% by weight of component E and
an effective amount of an emulsifier C,
are employed, based on the ready-to-use formulation.

**4.** A process as claimed in claim 2, wherein the glass transition temperature of component A is from 0 to 30 °C.

**5.** A process as claimed in claim 3, wherein the glass transition temperature of component A is from -60 to -5 °C.

**6.** A process as claimed in claim 3 or 5, wherein, based on the ready-to-use formulation, from 0.1 to 1% by weight of a thickener is used as an additional assistant.

**7.** A process as claimed in any of claims 1 to 6, wherein calcium carbonate having a mean particle size of from 0.5 to 200 µm is used as component B.

8. Use of a product obtained by a process as claimed in any of claims 1 to 7 as a sealing compound or an adhesive for ceramic tiles.

**Revendications**

1. Préparations aqueuses convenant à titre de matériaux d'étanchéité ou de colles pour des carreaux céramiques, contenant essentiellement

A) 3 à 30% en poids de particules de matière plastique, qui sont constituées

a) de 0,1 à 4% en poids d'au moins un mercaptosilane de la formule générale I

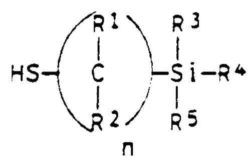

I ,

dans laquelle
n a une valeur qui varie de 1 à 8,
$R^1$ et $R^2$ représentent des atomes d'hydrogène et/ou des radicaux alkyle en $C_1$ à $C_4$,
$R^3$, $R^4$ et $R^5$ représentent des radicaux alkyle en $C_1$ à $C_6$ et/ou des radicaux alcoxy en $C_1$ à $C_6$, avec la condition qu'au moins l'un des symboles $R^3$ à $R^5$ représente un radical alcoxy et

b) de monomères à insaturation éthylénique, polymérisables par voie radicalaire, choisis parmi les esters de l'acide acrylique et de l'acide méthacrylique d'un alcanol en $C_1$ à $C_8$, d'un n-alcanol en $C_9$ à $C_{18}$, comme aussi d'un n-alcanediol en $C_2$ à $C_8$, diprimaire, les acides monocarboxyliques ou dicarboxyliques, $\alpha,\beta$-éthyléniquement insaturés, contenant de 3 à 5 atomes de carbone, comme aussi leurs monoamides ou diamides, qui peuvent être substitués, sur les atomes d'azote, par des radicaux alkyle ou alkylol contenant de 1 à 3 atomes de carbone, l'acrylonitrile et le méthacrylonitrile, des esters vinyliques d'acides n-alcanoïques en $C_2$ à $C_{12}$ et, à titre de monomères vinylaromatiques, le styrène, le vinyltoluène, le chlorostyrène, ou le tert-butylstyrène, à titre de quantité résiduelle,

où les polymères possèdent une température de transition vitreuse qui varie de -60 à +40 °C,

B) 40 à 90% en poids de charges inorganiques,

C) des proportions actives d'un émulsif,

D) 0 à 15% en poids de plastifiants externes et

E) 5 à 40% en poids d'eau.

2. Préparations aqueuses selon la revendication 1, contenant, à titre de constituants essentiels,

3 à 25% en poids du composant A,
50 à 85% en poids du composant B,
0 à 15% en poids du composant D,
10 à 30% en poids du composant E et
des proportions actives d'un émulsif C.

3. Préparations aqueuses selon la revendication 1, contenant, à titre de constituants essentiels,

15 à 30% en poids du composant A,
40 à 60% en poids du composant B,
0 à 15% en poids du composant D,
15 à 25% en poids du composant E et
des proportions actives d'un émulsif C.

4. Préparations aqueuses selon la revendication 2, caractérisées en ce qu'elles contiennent, à titre de composant A, un polymère qui possède une température de transition vitreuse de 0 à 30 °C.

5. Préparations aqueuses selon la revendication 2, caractérisées en ce qu'elles contiennent, à titre de composant A, un polymère qui possède une température de transition vitreuse de -60 à -5 °C.

6. Préparations aqueuses suivant la revendication 3 ou 5, caractérisées en ce qu'elles contiennent, à titre d'ajuvant supplémentaire, de 0,1 à 1% en poids d'un agent épaississant.

7. Préparations aqueuses suivant les revendications 1 à 6, caractérisées en ce qu'elles contiennent, à titre de composant B, du carbonate de calcium d'un calibre moyen des grains de 0,5 à 200 µm.

8. Procédé de fabrication des préparations aqueuse selon les revendications 1 à 7, caractérisé en ce que l'on incorpore sous agitation à une dispersion aqueuse à 40 à 70% en poids de matière plastique, qui contient l'émulsif C et le composant A à titre de phase dispersée, les composants B et D, comme aussi les adjuvants supplémentaires en proportions inférieures.

9. Utilisation de spréparations aqueuses selon les revendications 1 à 7, à titre de matériaux d'étanchéité ou de colles pour des dalles ou carreaux en matières céramiques.

**Revendications pour l'Etat contractant suivant : ES**

1. Procédé de fabrication de préparations aqueuses convenant à titre de matériaux d'étanchéité ou de colles pour des dalles ou carreaux en matières céramiques, caractérisé en ce que, conformément au procédé en soi connu de la polymérisation en émulsion et en recourant à l'emploi de proportions actives d'un émulsif C, on prépare une dispersion aqueuse à 70% en poids d'un matière plastique A constituée

   A) 3 à 30% en poids de particules de matière plastique, qui sont constituées

      a) de 0,1 à 4% en poids d'au moins un mercaptosilane de la formule générale I

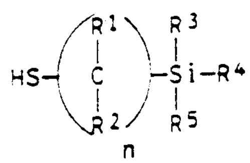

I ,

      dans laquelle
      n a une valeur qui varie de 1 à 8,
      $R^1$ et $R^2$ représentent des atomes d'hydrogène et/ou des radicaux alkyle en $C_1$ à $C_4$,
      $R^3$, $R^4$ et $R^5$ représentent des radicaux alkyle en $C_1$ à $C_6$ et/ou des radicaux alcoxy en $C_1$ à $C_6$, avec la condition qu'au moins l'un des symboles $R^3$ à $R^5$ représente un radical alcoxy et

      b) de monomères à insaturation éthylénique, polymérisables par voie radicalaire, choisis parmi les esters de l'acide acrylique et de l'acide méthacrylique d'un alcanol en $C_1$ à $C_8$, d'un n-alcanol en $C_9$ à $C_{18}$, comme aussi d'un n-alcanediol en $C_2$ à $C_8$, diprimaire, les acides monocarboxyliques ou dicarboxyliques, $\alpha,\beta$-éthyléniquement insaturés, contenant de 3 à 5 atomes de carbone, comme aussi leurs monoamides ou diamides, qui peuvent être substitués, sur les atomes d'azote, par des radicaux alkyle ou alkylol contenant de 1 à 3 atomes de carbone, l'acrylonitrile et le méthacrylonitrile, des esters vinyliques d'acides n-alcanoïques en $C_2$ à $C_{12}$ et, à titre de monomères vinylaromatiques, le styrène, le vinyltoluène, le chlorostyrène, ou le tert-butylstyrène, à titre de quantité résiduelle,

   en une manière telle que les polymères A présentent une température de transition vitreuse de -60 à +40 °C et on incorpore ensuite sous agitation, dans cette dispersion aqueuse de matière plastique, par rapport à la préparation finie,

   40 à 90% en poids de charges inorganiques B,
   0 à 15% en poids de plastifiants externes D

   et, en moindres proportions, des adjuvants supplémentaires en une manière telle que la teneur en eau de la préparation finie atteigne 5 à 40% en poids.

2. Procédé selon la revendication 1, caractérisé en ce que l'on utilise, par rapport à la préparation finie,

3 à 25% en poids du composant A,

50 à 85% en poids du composant B,
0 à 15% en poids du composant D,
10 à 30% en poids du composant E et
des proportions actives d'un émulsif C.

**3.** Préparations aqueuses selon la revendication 1, contenant, à titre de constituants essentiels,

15 à 30% en poids du composant A,
40 à 60% en poids du composant B,
0 à 15% en poids du composant D,
15 à 25% en poids du composant E et
des proportions actives d'un émulsif C.

**4.** Procédé selon la revendication 2, caractérisé en ce que la température de transition vitreuse du composant A varie de 0 à 30 ° C.

**5.** Procédé suivant la revendication 3, caractérisé en ce que la température de transition vitreuse du composant A varie de -60 à -5 ° C.

**6.** Procédé suivant la revendication 3 ou 5, caractérisé en ce que, par rapport à la préparation finie, on utilise, à titre d'adjuvant supplémentaire, 0,1 à 1% en poids d'un agent épaississant.

**7.** Procédé suivant les revendications 1 à 6, caractérisé en ce qu'à titre de composant B, on utilise du carbonate de calcium d'un calibre moyen des grains de 0,5 à 200 µm.

**8.** Utilisation des produits obtenus par mise en oeuvre du procédé selon l'une quelconque des revendications 1 à 7 à titre de matériaux d'étanchéité ou de colles pour des dalles ou carreaux en matières céramiques.